# EUROPEAN PATENT APPLICATION

(11) **EP 2 579 280 A1**
(43) Date of publication of application: **10.04.2013**
(21) Application number: 11382312.4
(22) Date of filing: 05.10.2011
(51) Int. Cl.: H01F 30/10, H01F 30/12, H02M 1/12

(54) **Transformer for blocking zero sequence components**

(71) Applicant: Ingeteam Technology S.A., 48170 Zamudio (ES)
(72) Inventor: Laka Basabe, Aitor, 48170 Zamudio (ES); Barrena Bruña, Jon Andoni, 48170 Zamudio (ES); Chivite Zabalza, Francisco Javier, 48170 Zamudio (ES); Calvo Olalla, Gorka, 48170 Zamudio (ES); Rodriguez Vidal, Miguel Angel, 48170 Zamudio (ES)
(74) Representative: Igartua, Ismael

(57) **Abstract**

Transformer for blocking zero sequence components, comprising at least one coil (1) connected to each phase (A, B, C) of a multi-phase system for which the transformer (1000) is designed, and at least one limb (40) for each phase (A, B, C) where the corresponding coil (1) is wound. The transformer (1000) also comprises a second coil (2) for each phase (A, B, C) connected to the corresponding first coil (1), the second coils (2) of the different phases (A, B, C) being connected in parallel to each other.

## Description

### TECHNICAL FIELD

This invention relates to magnetic units designed to block zero sequences components in a multi-phase system.

### PRIOR ART

Generally, magnetic units such as transformers for blocking zero sequence components or zero-sequence blocking transformers (ZSBTs) are used in multi-phase systems to eliminate or block zero components, the zero components of a system being understood as those components with an instantaneous value substantially equal in the different phases of the system. ZSBTs block the zero sequence components due to the fact that they present a high impedance in common mode and a low impedance in differential mode.

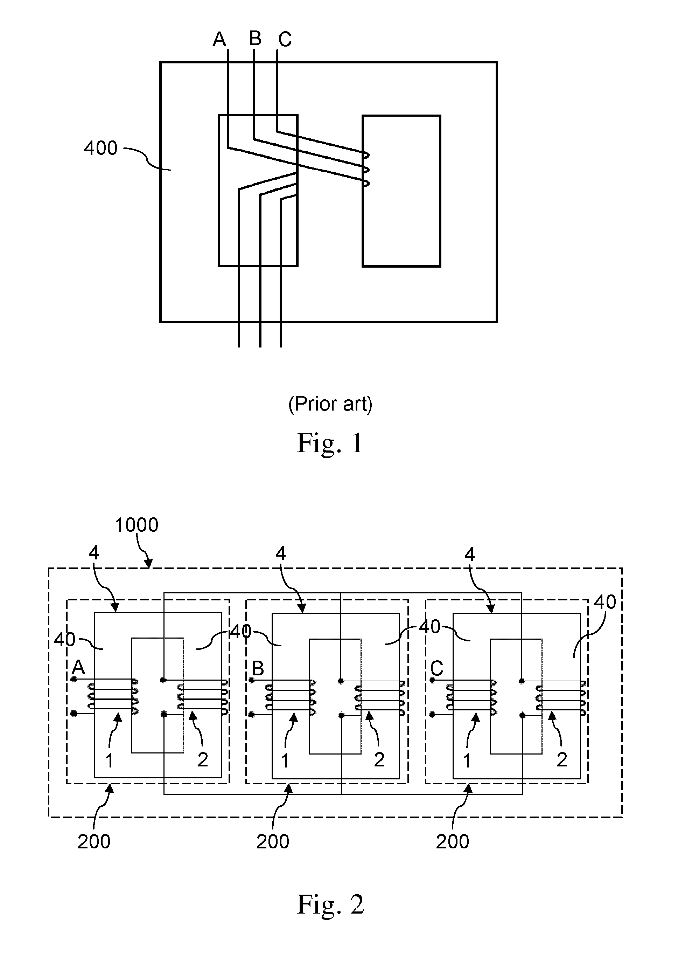

Figure 1 shows, by way of example, a conventional ZSBT for a three-phase system of phases A, B and C. The ZSBT comprises a core 400 with a limb where the coils corresponding to the different phases are wound. The mode of operation of a conventional ZSBT is widely known, and may be found for example in the document US 6101113 A. ZSBTs are widely used in multi-phase systems that comprise a plurality of inverters connected in parallel, although as the power of the systems increases their manufacture becomes more complex due to the increased difficulty in winding the coils of the different phases on a single column.

### BRIEF DESCRIPTION OF THE INVENTION

It is an object of the invention to provide a transformer for blocking zero sequence components, which replaces a conventional blocking transformer or ZSBT.

The transformer for blocking zero sequence components of the invention comprises at least one coil connected to each phase of a multi-phase system for which the transformer is designed.

The transformer also comprises at least one limb for each phase where the corresponding coil is wound, and a second coil for each phase, each second coil being connected to the corresponding first coil. The second coils of the different phases are connected in parallel to each other.

As a result, a high impedance is achieved in common mode and a low (or null) impedance in differential mode, which enables the blocking of the zero sequence components. In addition, thanks to the existence of a limb for each phase, the manufacture of a transformer for blocking the zero sequence components is made much easier, resulting in the end product being more reliable and in lower costs, due to the fact, for example, that less skilled labour is required and that manufacturing times are reduced.

These and other advantages and characteristics of the invention will be made evident in the light of the drawings and the detailed description thereof.

### DESCRIPTION OF THE DRAWINGS

Figure 1 shows a conventional ZSBST.
Figure 2 shows a first embodiment of the transformer of the invention, for a three-phase system.
Figure 3 shows a second embodiment of the transformer of the invention, for a three-phase system.
Figure 4 shows a third embodiment of the transformer of the invention, for a three-phase system.
Figure 5 schematically shows the transformer of Figure 2, with an additional coil connected in parallel to the second coils of said transformer.

### DETAILED DESCRIPTION OF THE INVENTION

The transformer 1000 of the invention is designed to block the zero sequence components of an alternating-voltage signal in a multi-phase system, which involves a reduction in the harmonic content of said alternating-voltage signal. Figures 2 to 4 show, by way of example, three different embodiments of the transformer 1000 of the invention, which in the three examples is designed for a three-phase system of phases A, B and C, although it is evident that the transformer 1000 may also be designed for systems with more phases or even for bi-phase systems, the relevant changes being made to adapt it in each case to the number of phases of the system.

In the three embodiments shown in the Figures the transformer 1000 comprises a first coil 1 connected to each of the phases A, B and C, a corresponding current ip with a phase circulating through each coil 1, and a limb 40; 90 for each phase A, B and C where the corresponding coil 1 is wound. As a result, the transformer 1000 comprises at least as many limbs 40; 90 as the number of phases of the system for which it has been designed.

In the three embodiments shown in the Figures the transformer 1000 also comprises a second coil 2 for each phase A, B and C, connected to the corresponding first coil 1, the second coils 2 of the different phases A, B and C being connected in parallel to each other. As they are connected, it should be understood that the same magnetic flow circulates through both coils 1 and 2, resulting from the subtraction between the flow produced individually by the coils 1 and 2. Thanks to the addition of a second coil 2 and to the connection in parallel of the second coils 2 of the different phases A, B and C a high impedance is achieved in common mode and a low (or null) impedance in differential mode, thus enabling the blocking of the zero sequence components. In common mode no current circulates through the second coil 2 due to the high impedance and no flow is generated as a result.

Figure 2 shows, by way of example, a first embodiment of transformer 1000 of the invention. In the first embodiment the transformer 1000 comprises a core 4 for each of the phases A, B and C of the system for which it is designed, the two coils 1 and 2 of a single phase A, B and C being wound on a single core 4 in different limbs 40, and preferably parallel to each other. The first coil 1 and the second coil 2 of each phase A, B and C may thus correspond with a primary coil and with a secondary coil respectively, a unit 200 formed by the first coil 1, the second coil 2 and the core 4 of each phase A, B and C corresponding with a single-phase transformer, the transformer 1000 comprising as many single-phase transformers as the number of phases of the system for which it is designed. In the common mode the instantaneous value of the currents is the same in all the phases A, B and C, as a result of which in the first embodiment the current through the second coil 2 of each core 4 is null as no current is able to circulate due to the manner in which said second coils 2 are connected electrically. Subsequently, no magnetic force is generated in the second coil 2 for the common-mode currents, and as a result of this the second coils 2 of the different cores 4, which are connected in parallel, may be considered open circuits (high impedance, characteristic of a convention ZSBT). Furthermore, in the differential mode the currents of the different phases A, B and C are out of phase by 120° and comprise substantially the same amplitude (in the case of a number of phases other than three, the phase difference would be different to 120°), so that the instantaneous value is null. As a result, the total flow in the differential mode through the core 4 is null and the second coils 2 of the different cores 4, which are connected in parallel, may be considered short - circuited (low impedance, characteristic of a conventional ZSBT). The transformer 1000 of the first embodiment thus meets the requirements of a conventional ZSBT.

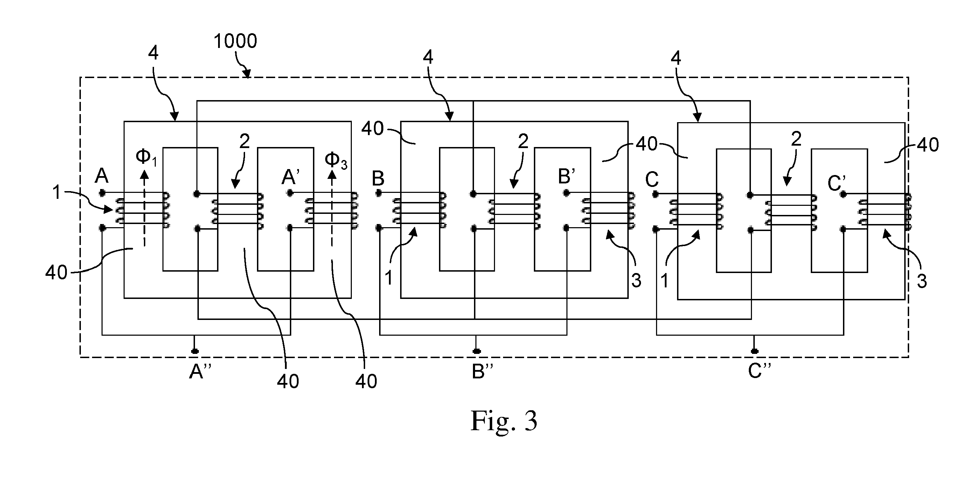

Figure 3 shows, by way of example, a second embodiment of the transformer 1000 of the invention. One of the applications of transformers for blocking zero sequence components is their disposing at the output of the inverters, for example, and the transformer 1000 of the second embodiment is adapted to connect in parallel the output of two inverters of a multi-phase system and to block the zero sequence components. Generally, magnetic elements such as inter-phase transformers (IPTs) are used to connect two inverters in parallel, and the transformer 1000 of the invention, in its second embodiment, combines the functions to be performed by a conventional ZSBT and a conventional IPT in a single magnetic element.

In the second embodiment the transformer 1000 is analogous to the transformer 1000 of the first embodiment, thereby meeting the requirements of a conventional ZSBT, but also comprises an additional coil 3 for each phase A, B and C, which is wound on an additional limb 40 of the core 4 corresponding to its phase A, B and C, said additional limb 40 preferably being parallel to the limbs 40 corresponding to the first and second coils 1 and 2. The first coil 1 of a core 4 is connected to a phase A, B or C of a first inverter, and the third coil 3 of the same core 4 is connected to a phase A', B' or C' of a second inverter that is to be connected in parallel to the first inverter, both phases being complementary. The outputs of the first coil 1 and of the additional coil 3 of a single core 4 are connected, the two inverters thereby being connected in parallel. In addition, the first coil 1 and the additional coil 3 of each phase A, B and C comprise an equal number of turns and are proportioned in such a way that they generate respective flows Φ1, Φ3 in opposite directions and with substantially equal values, which is one of the characteristics of conventional IPTs.

In the second embodiment the limb 40 where the second coil 2 is wound corresponds with the central limb of the corresponding core 4, as shown in Figure 3.

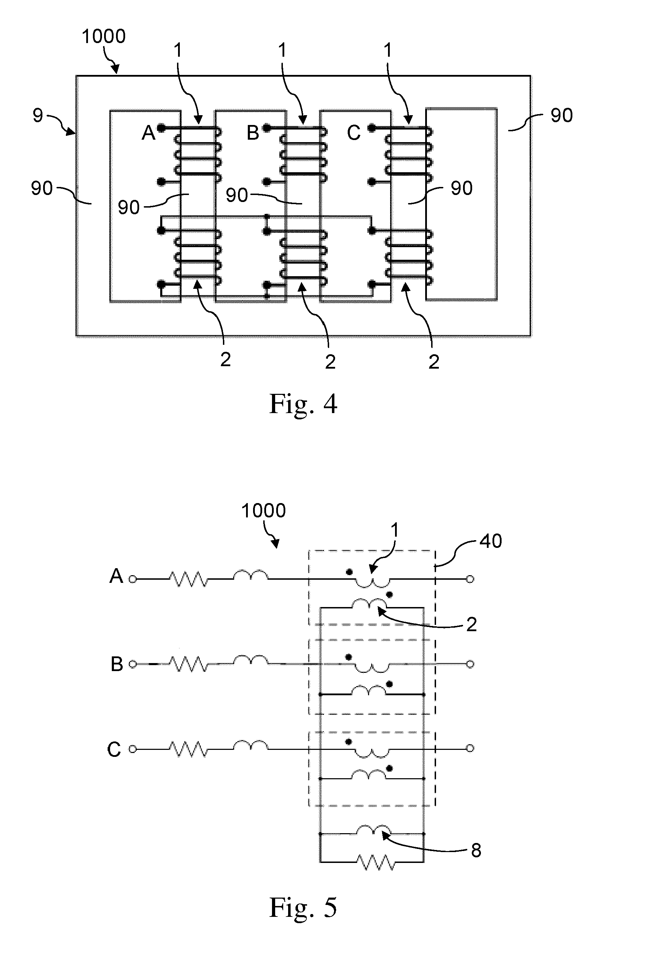

Figure 4 shows, by way of example, a third embodiment of the transformer 1000 of the invention. In the third embodiment the transformer 1000 comprises a single core 9 for all the phases A, B and C of the system for which it is designed, the core 9 comprising a limb 90 for each phase A, B and C, which are preferably parallel, so that the coils 1 and 2 of a single phase A, B and C are wound on a single limb 90. The coils 1 and 2 of each phase A, B and C are proportioned in such a way that the flow generated in each limb 90 corresponding to the different phases A, B and C is substantially equal.

In the third embodiment the core 9 comprises at least as many limbs 90 as number of phases A, B and C of the system for which it is designed plus an additional limb 90, so that a closed circuit is generated for the total flow generated in the core 9 through said additional limb 90. Preferably, the core 9 comprises two additional limbs 90 and the limbs 9 with the coils 1 and 2 disposed between said two limbs 90, in order to balance as far as is possible the path of the different flows generated due to the different phases A, B and C. In the common mode the instantaneous value of the currents is the same in all the phases A, B and C, as a result of which in the third embodiment the current through each second coil 2 is null. Subsequently, no magnetic force is generated due to the second coil 2 for the common-mode currents, and as a result of this the different second coils 2, which are connected in parallel, may be considered open circuits (high impedance, characteristic of a conventional ZSBT). Furthermore, in the differential mode the currents of the different phases A, B and C are out of phase by 120° and comprise substantially the same amplitude (in the case of a number of phases other than three the phase difference would be different to 120°), so that the instantaneous value is null. As a result, the total flow in the differential mode through the core 9 is null and the different second coils 2, which are connected in parallel, may be considered short - circuited (low impedance, characteristic of a conventional ZSBT). As a result, the transformer 1000 of the third embodiment meets the requirements of a conventional ZSBT.

The transformer 1000 may also comprise an additional coil 8 connected in parallel to the second coils 2, as shown in Figure 5 by way of example, in order, should it be necessary, to reduce or adjust the impedance value of the transformer 1000.

## Claims

1. Transformer for blocking zero sequence components, comprising at least one coil (1) connected to each phase (A, B, C) of a multi-phase system for which the transformer (1000) is designed,
**characterised in that**
it also comprises at least one limb (40; 90) for each phase (A, B, C) where the corresponding coil (1) is wound, and a second coil (2) for each phase (A, B, C) connected to the corresponding first coil (1),
the second coils (2) of the different phases (A, B, C) being connected in parallel to each other.

2. Transformer according to claim 1, comprising a core (4) for each phase (A, B, C), the coils (1, 2) of a single phase (A, B, C) being wound on a single core (4).

3. Transformer according to claim 2, wherein the first coil (1) and the second coil (2) of each phase (A, B, C) correspond with a primary coil and a secondary coil respectively, a unit (200) formed by the first coil (1), the second coil (2) and the core (4) of each phase (A, B, C) corresponding with a single-phase transformer.

4. Transformer according to claim 2, which is designed to connect two inverters in series and comprises an additional coil (3) for each phase (A, B, C) of the system wound on the corresponding core (4), the outlets of the first coil (1) and the additional coil (3) of a single core (4) being connected each other.

5. Transformer according to claim 4, wherein the first coil (1) and the additional coil (3) of each phase (A, B, C) are proportioned in such a way that they generate flows (Φ1, Φ3) in opposite directions and with substantially equal values.

6. Transformer according to claims 4 or 5, wherein the core (4) comprises a limb (40) for each coil (1, 2, 3).

7. Transformer according to claim 6, wherein the limbs (40) are parallel to each other.

8. Transformer according to claim 6, wherein the limb (40) where the second coil (2) is wound corresponds with the central limb of the corresponding core (4).

9. Transformer according to claim 1, comprising a single core (9) for all the phases (A, B, C), the core (9) comprising a limb (90) for each phase (A, B, C), so result that the coils (1, 2) of a single phase (A, B, C) are wound on a single limb (90), the core (9) comprising at least as many limbs (90) as the system has phases (A, B, C) plus one additional column.

10. Transformer according to claim 9, wherein the core (9) comprises at least two additional limbs (90), the limbs (90), along with the coils (1, 2) of the different phases (A, B, C), being disposed between both additional limbs (90).

11. Transformer according to claims 9 or 10, wherein the limbs (90) are parallel to each other.

12. Transformer according to any of the preceding claims, comprising an additional coil (8) connected in parallel to the second coils (2).

13. Multi-phase system, **characterised in that** it comprises a transformer (1000) according to any of the preceding claims.
